# EUROPÄISCHE PATENTSCHRIFT

(11) **EP 2 398 138 B1**
(45) Veröffentlichungstag und Bekanntmachung des Hinweises auf die Patenterteilung: **10.07.2019**
(21) Anmeldenummer: 11161409.5
(22) Anmeldetag: 07.04.2011
(51) Int. Cl.: H02M 7/483, H02M 1/32, H02H 7/122

(54) **Verfahren zum Sperren eines multimodularen Stromrichters**
Method for blocking a multimodular converter
Procédé de fermeture d'un convertisseur multimodulaire

(30) Priorität: 15.06.2010 DE 102010030078
(43) Veröffentlichungstag der Anmeldung: 21.12.2011
(73) Patentinhaber: Siemens Aktiengesellschaft, 80333 München (DE)
(72) Erfinder: Hiller, Marc, 91207 Lauf an der Pegnitz (DE); Krug, Dietmar, 90459 Nürnberg (DE); Sommer, Rainer, 91336 Heroldsbach (DE)

(56) Entgegenhaltungen:
- DE-A1- 10 103 031
- JP-A- 55 -33 313

## Beschreibung

Die Erfindung bezieht sich auf ein Verfahren zum Sperren eines Stromrichters mit verteilten Energiespeichern mit wenigstens zwei Phasenmodulen, die jeweils einen oberen und unteren Ventilzweig aufweisen, die jeweils eine Vielzahl von elektrisch in Reihe geschalteten zweipoligen Submodulen aufweisen, die jeweils einen unipolaren Speicherkondensator aufweisen, dem eine Reihenschaltung zweier abschaltbarer Halbleiterschalter jeweils mit einer antiparallel geschalteten Diode elektrisch parallel geschaltet ist.

Ein Stromrichter mit verteilten Energiespeichern ist aus der DE 101 03 031 A1 bekannt und in der FIG 1 schematisch dargestellt. Gemäß dieser Darstellung weist dieser Stromrichter 2 drei Phasenmodule 4₁, 4₂ und 4₃ auf, die jeweils einen oberen und unteren Ventilzweig P1 und N1 bzw. P2 und N2 bzw. P3 und N3 aufweisen. Diese beiden Ventilzweige P1, N1 bzw. P2, N2 bzw. P3, N3 eines jeden Phasenmoduls 4₁, 4₂ bzw. 4₃ sind zu einem Brückenzweig verschaltet. Ein Verknüpfungspunkt eines oberen und unteren Ventilzweigs P1 und N1 bzw. P2 und N2 bzw. P3 und N3 ist als wechselspannungsseitiger Anschluss L1, L2 bzw. L3 des Phasenmoduls 4₁, 4₂ bzw. 4₃ herausgeführt. An diesen wechselseitigen Anschlüssen L1, L2 bzw. L3 ist ein Drehstrommotor 6 bzw. ein Versorgungsnetz angeschlossen. Die Phasenmodule 4₁, 4₂ und 4₃ sind elektrisch parallel zu einander und zu einer nicht näher dargestellten Gleichspannungs-Einspeiseeinrichtung geschaltet, die an den Gleichspannungs-Anschlüssen P₀ und N₀ des Stromrichters 2 mit verteilten Energiespeichern C_{SM} angeschlossen ist. Zwischen diesen Gleichspannungs-Anschlüssen P₀ und N₀ steht eine generierte Gleichspannung U_{dc} an.

Dieser Darstellung des Stromrichters 2 mit verteilten Energiespeichern C_{SM} ist ebenfalls zu entnehmen, dass jeder Ventilzweig P1, N1, P2, N2, P3 und N3 eine Vielzahl von elektrisch in Reihe geschalteten zweipoligen Submodulen SM1, SM2, ..., SMn aufweist. Jedes zweipolige Submodul SM1, SM2, ..., SMn weist gemäß der Darstellung des Submoduls SM 1 einen unipolaren Speicherkondensator C_{SM}, zwei abschaltbare Halbleiterschalter S1 und S2 und zwei Dioden D1 und D2 auf. Die beiden abschaltbaren Halbleiterschalter S1 und S2 sind elektrisch in Reihe und diese Reihenschaltung elektrisch parallel zum unipolaren Speicherkondensator C_{SM} geschaltet. Antiparallel zu den abschaltbaren Halbleiterschaltern S1 und S2 ist jeweils eine Diode D1 bzw. D2 geschaltet. Diese Dioden D1 und D2 bilden somit jeweils eine Freilaufdiode. Ein Verbindungspunkt der beiden abschaltbaren Halbleiterschalter S1 und S2 ist als Modulanschluss X2 herausgeführt. Der negative Anschluss des unipolaren Speicherkondensators C_{SM} bildet einen zweiten Modulanschluss X1. Wenn der unipolare Speicherkondensator C_{SM} aufgeladen ist, fällt an ihm eine Kondensatorspannung U_{SM} ab.

Diese Kondensatorspannungen U_{SM1}, U_{SM2}, ..., U_{SMn} der zweipoligen Subsysteme SM1, SM2, ..., SMn eines jeden Ventilzweiges P1, N1, P2, N2, P3 und N3 addieren sich jeweils zu einer Ventilspannung U_{ZP1}, U_{ZN1}, U_{ZP2}, U_{ZN2}, U_{ZP3} und U_{ZN3}. Die Addition jeweils zweier Ventilspannungen U_{ZP1}, U_{ZN1} bzw. U_{ZP2} und U_{ZN2} bzw. U_{ZP3} und U_{ZN3} eines Phasenmoduls 4₁, 4₂ bzw. 4₃ ergibt die zwischen den Gleichspannungs-Anschlüssen P₀ und N₀ anstehende Gleichspannung U_{dc}.

Durch die Ausgestaltung eines jeden zweipoligen Subsystems SM des Stromrichters 2 mit verteilten Energiespeichern C_{SM} kann jedes Submodul SM jeweils in drei Schaltzustände, nämlich die Schaltzustände I, II und III, gesteuert werden. Im Schaltzustand I ist der abschaltbare Halbleiterschalter S1 im EIN-Zustand und der abschaltbare Halbleiterschalter S2 im AUS-Zustand. Dadurch steht an den Modulanschlüssen X2 und X1 des Submoduls SM als Klemmenspannung U_{X2X1} die Kondensatorspannung U_{SM} an, unabhängig von der Richtung eines fließenden Zweigstroms i_{Z}. Im Schaltzustand II ist der abschaltbare Halbleiterschalter S1 im AUS-Zustand und der abschaltbare Halbleiterschalter S2 im EIN-Zustand, wodurch an den Modulanschlüssen X2 und X1 des Submoduls SM eine Klemmenspannung U_{X2X1} mit der Amplitude Null ansteht, ebenfalls unabhängig von der Richtung eines fließenden Zweigstroms i_{Z}. Im Schaltzustand III sind beide abschaltbaren Halbleiterschalter S1 und S2 im AUS-Zustand. Die Amplitude der Klemmenspannung U_{X2X1} eines jeden Submoduls SM ist im Schaltzustand III von der Richtung eines fließenden Zweigstroms i_{Z} abhängig. Ist der Zweigstrom größer Null, so entspricht die Amplitude der Klemmenspannung U_{X2X1} des Submoduls SM der Amplitude der Kondensatorspannung U_{SM} dieses Submoduls SM. Ist hingegen der Zweigstrom kleiner Null, so ist die Amplitude der Klemmenspannung gleich Null. Fließt kein Zweigstrom i_{Z} und ist die Spannungsaufteilung über den abschaltbaren Halbleiterschaltern S1 und S2 des Submoduls SM symmetrisch, entspricht die Amplitude der Klemmenspannung U_{X2X1} der halben Amplitude der Kondensatorspannung U_{SM} des Submoduls SM.

Gemäß der DE 101 03 031 A1 werden nur die Schaltzustände I und II der Submodule SM des Stromrichters 2 mit verteilten Energiespeichern C_{SM} im regulären Betrieb dieses Stromrichters 2 verwendet. Der Schaltzustand III wird nur bei Störungsfällen wie z.B. Kurzschluss an seinen Gleichspannungs-Anschlüssen P₀ und N₀, für den gezielten Leerlauf (Unterbrechung des Stromrichterbetriebs) und für vernachlässigbar kurze Schaltverzögerungszeiten der abschaltbaren Halbleiterschalter S1 und S2 eines Submoduls SM bei Schaltzustandswechsel verwendet.

Es ist allgemein bekannt, dass eine so genannte Impulssperre aktiviert wird, um in kritischen Betriebszuständen, wie z.B. Überstrom, Überspannung, Ausfall einer Ansteuerung, Ausfall einer Regelung, Ausfall einer Kommunikation zwischen Stromrichterventil und Modulator ... , den Stromrichter derart abzuschalten, dass sich dieser nach Betätigung der Impulssperre in einem sicheren Zustand befindet. Gemäß der DE 10 2004 043 877 A1 wird diese Impulssperre dadurch realisiert, dass alle Stromrichterventile des selbstgeführten Stromrichters (Wechselrichter) gesperrt werden. Dies erfolgt vorzugsweise durch Unterbrechung der aus einer externen Spannung abgeleiteten Versorgungsspannung für die Optokoppler der zugehörigen Ansteuerschaltungen.

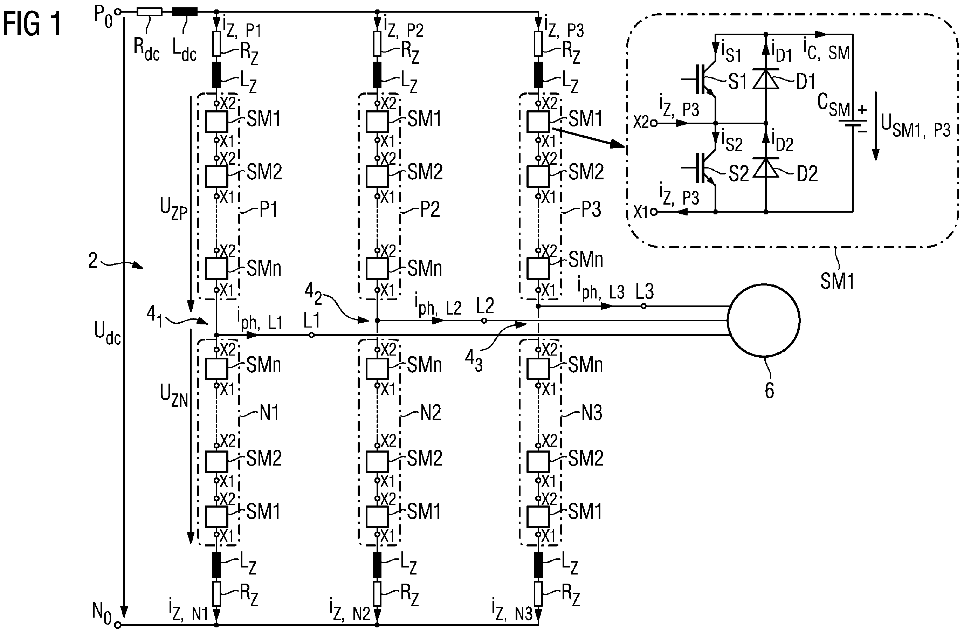

Wird bei einem Stromrichter 2 mit verteilten Energiespeichern C_{SM} eine Impulssperre ausgelöst, so müssen alle Ansteuersignale der abschaltbaren Halbleiterschalter S1 und S2 aller Submodule SM1, SM2, ..., SMn aller Ventilzweige P1, N1, P2, N2, P3 und N3 der Phasenmodule 4₁, 4₂ und 4₃ des Stromrichters 2 mit verteilten Energiespeichern C_{SM} nach FIG 1 gleichzeitig gesperrt werden.

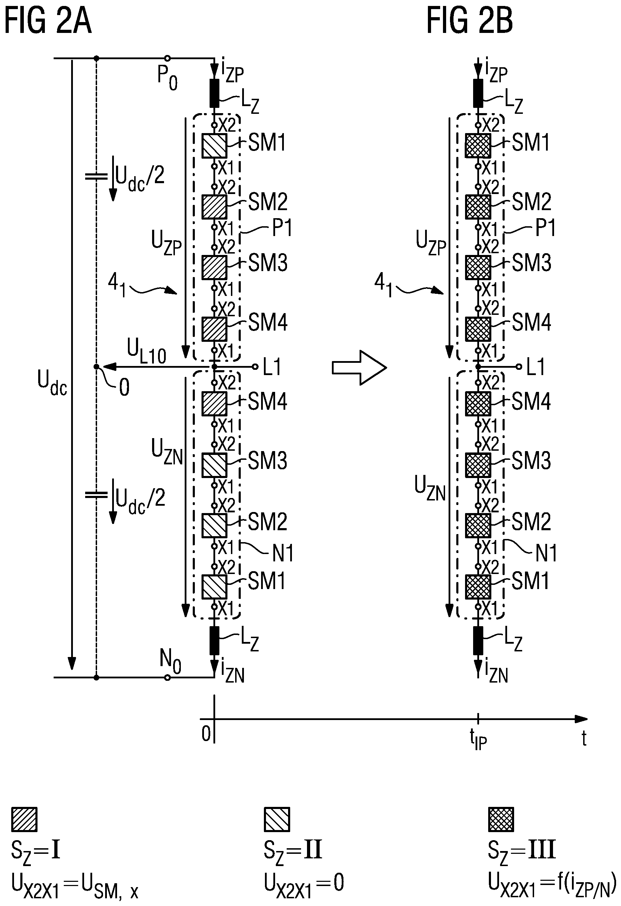

In der FIG 2a ist vom Stromrichter 2 mit verteilten Energiespeichern C_{SM} gemäß FIG 1 wegen der Übersichtlichkeit nur das Phasenmodul 4₁ näher dargestellt. Die Submodule SM1, ..., SM4 des oberen und unteren Ventilzweiges P1 und N1 dieses Phasenmoduls 4₁ zeigen eine Schaltzustandsverteilung während eines normalen Betriebes dieses Stromrichters 2. Von den vier Submodulen SM1, ..., SM4 des oberen Ventilzweigs P1 sind die Submodule SM2 bis SM 4 im Schaltzustand I und das Submodul SM1 im Schaltzustand II. Von den Submodulen SM1, ..., SM4 des unteren Ventilzweigs N1 befinden sich die Submodule SM1 bis SM3 im Schaltzustand II und das Submodul SM4 im Schaltzustand I. Somit gilt für die an den Gleichspannungs-Anschlüssen P₀ und P₀ des Stromrichters 2 anstehende Gleichspannung U_{dc} amplitudenmäßig U_{dc}=4•U_{SM}. Für die Spannung u_{ZP} des oberen Ventilzweigs P1 gegenüber einem virtuellen Mittelpunkt gilt u_{ZP}=3•U_{SM}, wogegen für die Spannung u_{ZN} des unteren Ventilzweigs N1 gilt u_{ZN}=1•U_{SM}.

Nachdem eine Impulssperre ausgelöst worden ist, werden alle Submodule SM1 bis SM4 des oberen und unteren Ventilzweigs P1 und N1 in den Schaltzustand III versetzt. Das Phasenmodul 4₁ mit Submodulen SM1 bis SM4 im Schaltzustand III ist in der FIG 2b dargestellt. Das Setzen der Impulssperre kann einerseits durch einen auftretenden Fehler (z. B. Überstrom) von einer nicht näher dargestellten Steuer- und Regeleinrichtung des Stromrichters 2 und andererseits autark auch von den Submodulen SM1 bis SM4 (Störung bzw. Abriss der Kommunikation, Überspannung) veranlasst werden. Da der Zeitpunkt des Setzens einer Impulssperre nicht vorhersagbar ist, werden die Spannungen u_{ZP} und u_{ZN} bzw. deren Änderungen du_{ZP}/dt und du_{ZN}/dt über den Ventilzweigen P1 und N1 eines Phasenmoduls 4₁ allein durch die Richtung des entsprechenden Zweigstroms i_{ZP1} und i_{ZN1} beim Setzen der Impulssperre bestimmt.

Unter der Annahme, dass die Summe der beiden Zweigspannungen u_{ZP} und u_{ZN} einer Phase 4₁ bzw. 4₂ bzw. 4₃ im Normalbetrieb im Mittel der Gleichspannung U_{dc} entspricht, ergeben sich die in der folgenden Tabelle

| Richtung der Zweigströme i_{ZP} / i_{ZN} | pos / pos | pos / neg | neg/ pos | neg/ neg |
|---|---|---|---|---|
| | | | | |
| u_{ZP} | U_{dc} | U_{dc} | 0 | 0 |
| u_{ZN} | U_{dc} | 0 | U_{dc} | 0 |
| u_{ZP} + u_{ZN} | 2 U_{dc} | U_{dc} | U_{dc} | 0 |
| Δ( u_{ZP} + u_{ZN}) * | + U_{dc} | 0 | 0 | - U_{dc} |

| | | | | |
|---|---|---|---|---|
| * Annahme: mittlere Summe der Zweigspannungen vor der Impulssperre (u_{ZP}+u_{ZN}) =U_{dc} | | | | |

aufgeführten Spannungen bzw. Spannungsänderungen nach dem Setzen einer Impulssperre. Des Weiteren wird angenommen, dass die Kondensatorspannungen U_{SM} eines jeden Submoduls SM im Mittel einen Wert von U_{SM} = U_{dc}/n_{sub} aufweist, wobei n_{sub} die Anzahl der in Reihe geschalteten Submodule SM1, ..., SMn pro Ventilzweig P1, N1, P2, N2,P3 und N3 des Stromrichters 2 mit verteilten Energiespeichern C_{SM} darstellt.

Dieser Tabelle ist zu entnehmen, dass bezüglich der Spannungsänderung in den Zweigen einer Phase zwei worst-case-Szenarien beim Setzen einer Impulssperre auftreten. Die maximale Spannungsänderung der Summe der Zweigspannungen u_{ZP} und u_{ZN} eines Phasenmoduls 4₁, 4₂ und 4₃ beträgt ± U_{dc} und tritt auf, wenn beide Zweigströme i_{ZP} und i_{ZN} eines Phasenmoduls 4 gleiche Vorzeichen aufweisen. Dieser Zustand bleibt so lange erhalten, bis einer der Zweigströme zu Null abkommutiert ist.

Durch das Einschalten des Schaltzustands III treten in den Submodulen SM2, SM3, SM4 des oberen Ventilzweigs P1 und dem Submodul SM4 des unteren Ventilzweigs N1 des Phasenmoduls 4₁ Kommutierungen von dem abschaltbaren Halbleiterschalter S1 auf eine Diode D2 der genannten Submodule auf, wenn vor dem Setzen der Impulssperre die Summe der Zweigspannungen u_{ZP} und u_{ZN} eines Phasenmoduls 4₁ im Mittel gleich der Gleichspannung U_{dc} zwischen den Gleichspannungs-Anschlüssen P₀ und N₀ und die Zweigströme i_{ZP} und i_{ZN} ein negatives Vorzeichen haben. Im Submodul SM1 des oberen Ventilzweigs P1 und den Submodulen SM1, SM2, SM3 des unteren Ventilzweiges N1 des Phasenmoduls 41 treten beim Einschalten des Schaltzustandes III keine Kommutierungen auf, wenn vor dem Setzen der Impulssperre die Summe der Zweigspannungen u_{ZP} und u_{ZN} eines Phasenmoduls 4₁ im Mittel gleich der Gleichspannung U_{dc} und die Zweigströme i_{ZP} und i_{ZN} ein negatives Vorzeichen haben, da vor dem Einschalten des Schaltzustandes III die Diode D2 den entsprechenden Zweigstrom geführt hat.

Hingegen treten durch das Einschalten des Schaltzustandes III in dem Submodulen SM1 des oberen Ventilzweiges P1 und den Submodulen SM1, SM2, SM3 des unteren Ventilzweiges N1 des Phasenmoduls 4₁ Kommutierungen von dem abschaltbaren Halbleiterschalter S2 auf die Diode D1 der genannten Submodule auf, wenn vor dem Setzen der Impulssperre die Summe der Zweigspannungen u_{ZP} und u_{ZN} eines Phasenmoduls 4₁ im Mittel gleich der Gleichspannung U_{dc} zwischen den Gleichspannungs-Anschlüssen P₀ und Nₒ und die Zweigströme i_{ZP} und i_{ZN} ein positives Vorzeichen haben. In den Submodulen SM2, SM3, SM4 des oberen Ventilzweiges P1 und dem Submodul SM4 des unteren Ventilzweiges N1 des Phasenmoduls 4₁ treten beim Einschalten des Schaltzustandes III keine Kommutierungen auf, wenn vor dem Setzen der Impulssperre die Summe der Zweigspannungen u_{ZP} und u_{ZN} eines Phasenmoduls 4₁ im Mittel gleich der Gleichspannung U_{dc} und die Zweigströme i_{ZP} und i_{ZN} ein negatives Vorzeichen haben, da vor dem Einschalten des Schaltzustandes III die Diode D1 den entsprechenden Zweigstrom geführt hat.

Für jede Spannungsänderung, die während eines Kommutierungsvorgangs auftritt, wird pro Submodul SM eine Spannungsänderungsgeschwindigkeit eines abschaltbaren Halbleiterschalters S1 bzw. S2 angenommen, die beispielsweise 4kV/µs betragen kann. Es ergibt sich dann eine Spannungsänderungsgeschwindigkeit über beide Ventilzweige P1 und N1 des Phasenmoduls 4₁ einen Wert von 16kV/µs, da vier Submodule SM des Phasenmoduls 4₁ vor dem Setzen einer Impulssperre im Schaltzustand I sind. Je mehr Submodule SM pro Ventilzweig P1, N1, P2, N2, P3 und N3 des Stromrichters 2 mit verteilten Energiespeichern C_{SM} verwendet werden, um so höher ist der Wert der Spannungsänderung pro Phasenmodul 4₁, 4₂ und 4₃.

Um einen möglichst sinusförmigen Verlauf einer Ausgangsspannung u_{L10} bzw. u_{L20} bzw. u_{L30} am Ausgang L1 bzw. L2 bzw. L3 eines Phasenmoduls 4₁ bzw. 4₂ bzw. 4₃ des Stromrichters 2 mit verteilten Energiespeichern C_{SM} zu erhalten, werden beispielsweise zwölf und mehr Submodule SM pro Ventilzweig P1, N1, P2, N2, P3 und N3 verwendet. Bei zwölf Submodulen SM pro Ventilzweig P1, N1, P2, N2, P3 und N3 beträgt die Spannungsänderungsgeschwindigkeit bereits 48kV/µs.

Wird die an den Gleichspannungs-Anschlüssen P₀ und N₀ des Stromrichters 2 mit verteilten Energiespeichern C_{SM} anliegende Gleichspannung U_{dc} als konstant angenommen, so wirkt die genannte Spannungsänderungsgeschwindigkeit sowohl auf eine Zweigdrossel L_{Z} als auch auf eine parasitäre Drossel L_{dc} im Gleichspannungskreis. Diese Spannungsbelastung der Zweigdrossel L_{Z} führt zu einer größeren Baugröße wegen der Verwendung verstärkter Isolationen.

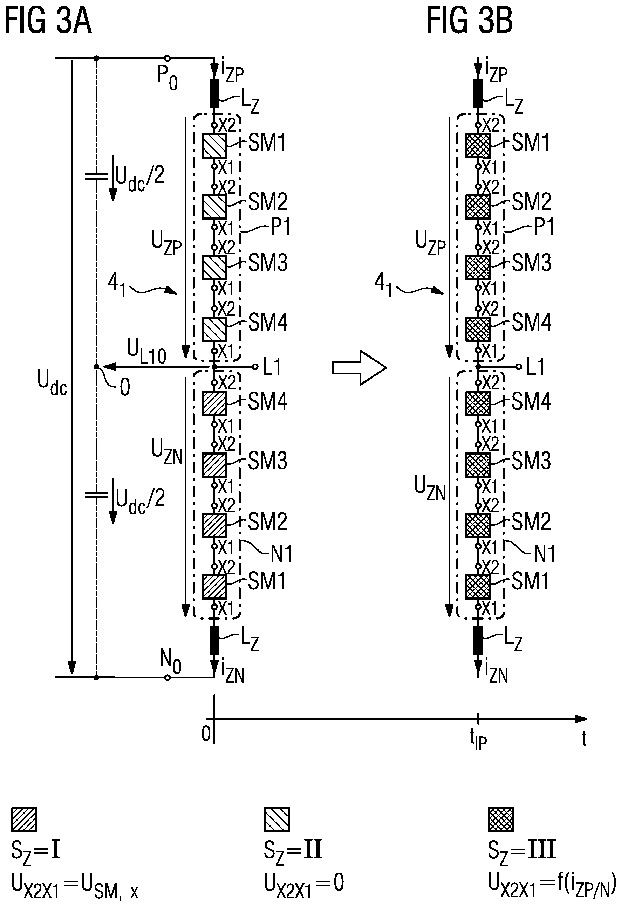

Bezüglich der Ausgangsspannungen u_{L10}, u_{L20} und u_{L30} des Stromrichters 2 mit verteilten Energiespeichern C_{SM} ergeben sich im Vergleich zu den stromrichterinternen Spannungen u_{ZP} und u_{ZN} andere worst-case-Bedingungen. Anhand der FIG 3a und 3b wird ein worst-case-Fall bezüglich der Spannungsänderungen in den Phasenspannungen u_{L10} des Phasenmoduls 4₁ des Stromrichters 2 nach FIG 1 näher erläutert.

Gemäß der Schaltzustandverteilung der Submodule SM1 bis SM4 der Ventilzweige P1 und N1 des Phasenmoduls 4₁ des Stromrichters 2 mit verteilten Energiespeichern C_{SM} der FIG 1 sind die Submodule SM1 bis SM4 des oberen Ventilzweiges P1 alle im Schaltzustand II. Demgegenüber sind die Submodule SM1 bis SM4 des unteren Ventilzweiges N1 alle im Schaltzustand I. Die Phasenspannung u_{L10}, die gleich der halben Differenz der Ventilspannungen u_{ZN} und u_{ZP} ist, beträgt U_{dc}/2. Wird nun eine Impulssperre gesetzt, so ergibt sich eine von der augenblicklichen Stromrichtung der Zweigströme i_{ZP} und i_{ZN} abhängige Spannungsänderung in der Phasenspannung u_{L10}. Eine Übersicht über die Spannungen bzw. Spannungsänderungen über den Ventilzweigen P und N eines Phasenmoduls 4 nach Setzen einer Impulssperre ist der nachfolgenden Tabelle

| Impulssperre | Richtung der Zweigströme i_{ZP} / i_{ZN} | pos / pos | pos / neg | neg/ pos | neg/ neg |
|---|---|---|---|---|---|
| | | | | | |
| Vor | u_{ZP} | 0 | 0 | 0 | 0 |
| | u_{ZN} | U_{dc} | U_{dc} | U_{dc} | U_{dc} |
| | u_{L10} | U_{dc}/2 | U_{dc}/2 | U_{dc}/2 | U_{dc}/2 |
| Nach | u_{ZP} | U_{dc} | U_{dc} | 0 | 0 |
| | u_{ZN} | U_{dc} | 0 | U_{dc} | 0 |
| | u_{L10} | 0 | - U_{dc}/2 | U_{dc}/2 | 0 |
| | Δu_{L10} | - U_{dc}/2 | - U_{dc} | 0 | - U_{dc}/2 |
| | Δ ( u_{ZP} + u_{ZN}) * | U_{dc} | 0 | 0 | - U_{dc} |

| | | | | | |
|---|---|---|---|---|---|
| * Annahme: Kondensatorspannung eines Submoduls U_{SM,X} = U_{dc}/n_{sub} | | | | | |

zu entnehmen.

Der worst-case-Fall bezüglich der Spannungsänderung in der Phasenspannung u_{L10} bzw. u_{L20} bzw. u_{L30} nach dem Setzen einer Impulssperre tritt dann auf, wenn vor dem Setzen der Impulssperre folgende Bedingungen gegeben sind:
- sämtliche Submodule eines Ventilzweiges, beispielsweise des Ventilzweiges N1, eines Phasenmoduls befinden sich im Schaltzustand I
- sämtliche Submodule eines korrespondierenden Ventilzweiges, beispielsweise des Ventilzweiges P1, eines Phasenmoduls befinden sich im Schaltzustand II
- der Zweigstrom, beispielsweise der Zweigstrom i_{ZN}, im Ventilzweig mit den im Schaltzustand I befindlichen Submodulen weist ein negatives Vorzeichen auf und
- der Zweigstrom, beispielsweise der Zweigstrom i_{ZP}, im Ventilzweig mit den im Schaltzustand II befindlichen Submodulen weist ein positives Vorzeichen auf.

Unter diesen Bedingungen springt die Phasenspannung u_{L10} von U_{dc}/2 auf -U_{dc}/2 bzw. von -U_{dc}/2 auf U_{dc}/2. Die Änderung der Phasenspannung u_{L10} beträgt somit unter diesen Bedingungen ± U_{dc}. Geht man nun davon aus, dass sich in jedem Submodul SM1 bis SM4 eines jeden Ventilzweiges P1 und N1 eines Phasenmoduls 4₁ aufgrund der Kommutierung von einem abschaltbaren Halbleiterschalter S1 bzw. S2 auf eine Diode D2 bzw. D1 eine Spannungsänderungsgeschwindigkeit von beispielsweise 4kV/µs über jedem Submodul SM des Phasenmoduls 4₁ einstellt, ergibt sich für die Spannungsänderungsgeschwindigkeit der Phasenspannung u_{L10}/dt bzw. u_{L20}/dt bzw. u_{L30}/dt ein Wert von 16kV/µs bei vier Submodulen SM pro Ventilzweig P und N und ein Wert von 48 kV/µs bei zwölf Submodulen SM pro Ventilzweig P und N eines Phasenmoduls 4₁.

Dies bedeutet für eine verkettete Spannung u_{L1L2} im worst-case-Fall, bei dem zwei Phasenspannungen entgegengesetzt um ± U_{dc} springen, dass sich über eine Ausgangsimpedanz (Ständerwicklung eines angeschlossenen Drehstrommotors 6) eine Spannungsänderung von Δu_{L1L2} = ± 2U_{dc} sowie eine Spannungsänderungsgeschwindigkeit von 32kV/µs, wenn vier Submodule SM pro Ventilzweig P und N eines Phasenmoduls 4₁ verwendet werden, bzw. von 96kV/µs, wenn zwölf Submodule SM pro Ventilzweig P und N eines Phasenmoduls 4₁ verwendet werden. Damit eine netzseitige Gleichspannungs-Einspeisung und ein lastseitig angeschlossener Drehstrommotor 6 beim Auftreten von worst-case-Fällen nicht zu sehr geschädigt werden, müssen diese Komponenten für eine sehr viel höhere Spannungsänderungsgeschwindigkeit ausgelegt sein, wodurch zusätzliche Kosten in einer nicht unerheblichen Höhe verursacht werden.

Der Erfindung liegt nun die Aufgabe zugrunde, ein Verfahren zum Sperren eines Stromrichters mit verteilten Energiespeichern anzugeben, wobei in worst-case-Fällen die Spannungsbelastung erheblich vermindert ist.

Diese Aufgabe wird mit den Verfahrensschritten des Anspruchs 1 erfindungsgemäß gelöst.

Dadurch, dass nicht alle Submodule des Stromrichters mit verteilten Energiespeichern gleichzeitig, sondern zeitlich gestaffelt in den Schaltzustand III gesteuert werden, tritt pro Zeitstaffel nur die Spannungsbelastung entsprechend einer Spannungsänderungsgeschwindigkeit eines Submoduls auf. Die Anzahl der Zeitstaffeln entspricht der Anzahl der Submodule eines Ventilzweigs des Stromrichters mit verteilten Energiespeichern. Das heißt, dass pro Zeitstaffel immer nur ein Submodul eines oberen und/oder eines unteren Ventilzweigs jeweils eines Phasenmoduls vom aktuellen Schaltzustand I oder II in den Schaltzustand III gesteuert werden. Bei vier Submodulen pro Ventilzweig des Stromrichters mit verteilten Energiespeichern benötigt man vier Zeitstaffeln, um eine gesetzte Impulssperre vollständig umzusetzen.

Der wesentliche Vorteil dieses erfindungsgemäßen Verfahrens besteht darin, dass die Spannungsbelastung maximal der Spannungsänderungsgeschwindigkeit zweier Submodule entspricht. Diese Verringerung der Spannungsbelastung ist umso größer, je mehr Submodule für jeden Ventilzweig des Stromrichters mit verteilten Energiespeichern vorgesehen sind. Damit die Phasenausgangsspannungen des Stromrichters mit verteilten Energiespeichern möglichst sinusförmig (hohe Treppenstufenzahl) sein soll, muss die Anzahl verwendeter Submodule pro Ventilzweig zwölf und größer sein.

Ob die Submodule eines Phasenmoduls in der Reihenfolge von außen nach innen oder von innen nach außen jeweils in den Schaltzustand III zeitgestaffelt gesteuert werden, ändert nichts am Wert der Verringerung der Spannungsbelastung und der Zeitspanne für die Umsetzung einer Impulssperre.

Bei einem vorteilhaften Verfahren ist die minimalste Zeitspanne zwischen zwei Zeitstaffeln gleich einer Ausschaltverzögerungszeit (delay time) eines abschaltbaren Halbleiterschalters eines Submoduls. Dadurch wird sichergestellt, dass nach Ablauf der minimalsten Zeitspanne zweier aufeinander folgender Zeitstaffeln ein Submodul eines oberen und unteren Ventilzweigs eines jeden Phasenmoduls des Stromrichters mit verteilten Energiespeichern den Schaltzustandswechsel abgeschlossen hat.

Zur weiteren Erläuterung wird auf die Zeichnung Bezug genommen, in der das erfindungsgemäße Verfahren veranschaulicht ist.
- FIG 1: zeigt ein Ersatzschaltbild eines bekannten Stromrichters mit verteilten Energiespeichern, die
- FIG 2a, 2b: zeigen Schaltzustandsverteilungen der Submodule eines Phasenmoduls des Stromrichters nach FIG 1 vor und nach dem Setzen einer Impulssperre, in den
- FIG 3a, 3b: sind Schaltzustandsverteilungen der Submodule eines Phasenmoduls des Stromrichters nach FIG 1 vor und nach dem Setzen einer Impulssperre dargestellt, und in den
- FIG 4a bis 4e: sind jeweils Schaltzustandsverteilungen der Submodule eines Phasenmoduls des Stromrichters nach FIG 1 veranschaulicht, die mittels des erfindungsgemäßen Verfahrens entstehen.

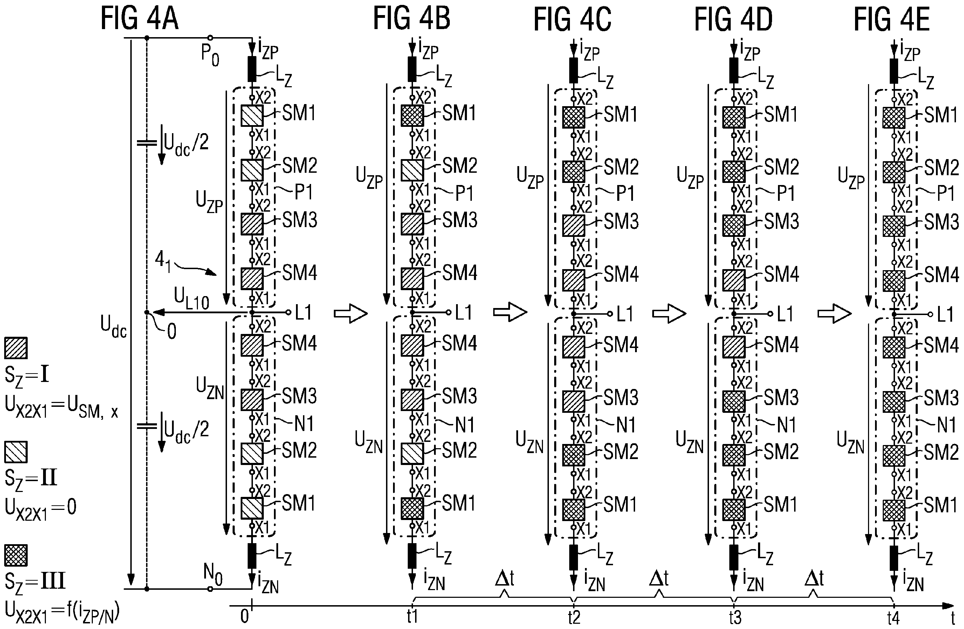

Anhand der FIG 4a bis 4e soll nun das erfindungsgemäße Verfahren zum Sperren eines Stromrichters 2 mit verteilten Energiespeichern C_{SM} gemäß FIG 1 näher erläutert werden. Gemäß dem erfindungsgemäßen Verfahren wird nach Setzen einer Impulssperre die Submodule SM1 bis SM4 eines oberen und unteren Ventilzweigs P1 und N1 eines jeden Phasenmoduls 4₁, 4₂ und 4₃ des Stromrichters 2 nicht mehr gleichzeitig in den Schaltzustand III gesteuert, sondern zeitlich gestaffelt. Diese zeitliche Abstufung der Abarbeitung einer gesetzten Impulssperre ist durch vier Schaltzustandsverteilungen der Submodule SM1 bis SM4 der Ventilzweige P1 und N1 des Phasenmoduls 4₁ dargestellt, wobei die Pfeile zwischen jeweils zwei Schaltzustandverteilungen des Phasenmoduls 4₁ gemäß der FIG 4b bis 4e jeweils eine vorbestimmte Zeitspanne Δt bei der zeitlich gestaffelten bzw. abgestuften Umsetzung der Abarbeitung einer gesetzten Impulssperre symbolisieren.

In der FIG 4a ist das Phasenmodul 4₁ des Stromrichters 2 nach FIG 1 mit einer zufälligen Schaltzustandsverteilung der Submodule SM1 bis SM4 seines oberen und unteren Ventilzweigs P1 und N1 dargestellt. Von den Submodulen SM1 bis SM4 der Ventilzweige P1 und N1 des Phasenmoduls 4₁ sind die Submodule SM1 und SM2 jeweils im Schaltzustand II, wogegen die Submodule SM3 und SM4 sich jeweils im Schaltzustand I befinden. Wird nun eine Impulssperre gesetzt, so wird in einem ersten Schritt zum Zeitpunkt t1 (FIG 4b) jeweils ein Submodul SM1 des oberen und unteren Ventilzweiges P1 und N1 in den Schaltzustand III gesteuert. Nach Ablauf einer vorbestimmten Zeitspanne Δt, also zum Zeitpunkt t2 (FIG 4c), wird jeweils ein weiteres Submodul SM2 des oberen und des unteren Ventilzweiges P1 und N1 des Phasenmoduls 4₁ in den Schaltzustand III gesteuert. Nach Ablauf einer vorbestimmten Zeitspanne Δt, nämlich zum Zeitpunkt t3 (FIG 4d), wird jeweils ein weiteres Submodul SM3 des oberen und unteren Ventilzweiges P1 und N1 dieses Phasenmoduls 4₁ in den Schaltzustand III gesteuert. Nach Ablauf einer weiteren Zeitspanne Δt wird zum Zeitpunkt t4 (FIG 4e) ein weiteres Submodul SM4 des oberen und unteren Ventilzweiges P1 und N1 dieses Phasenmoduls 4₁ in den Schaltzustand III gesteuert. Somit sind zum Zeitpunkt t4 alle Submodule SM1 bis SM4 eines jeden Ventilzweigs P1, N1, P2, N2, P3 und N3 des Stromrichters 2 mit verteilten Energiespeichern C_{SM} im Schaltzustand III, womit eine gesetzte Impulssperre erfindungsgemäß abgestaffelt umgesetzt ist.

Als zeitliche Abstaffelung tritt zwischen den einzelnen Verfahrensschritten (FIG 4b bis 4e) jeweils eine vorbestimmte Zeitspanne Δt auf, die vorzugsweise einer so genannten "delay time" eines abschaltbaren Halbleiterschalters S1 bzw. S2 eines Submoduls SM entspricht. Diese delay-time eines abschaltbaren Halbleiterschalters S1 bzw. S2 eines Submoduls SM ist die minimalste Zeitspanne Δt, die umgesetzt werden kann. Nach Ablauf jeweils einer minimalsten Zeitspanne Δt ist ein Schaltzustandswechsel eines Submoduls SM abgeschlossen. Dadurch ist sichergestellt, dass bei jeder Zeitstufe der abgestuften Abarbeitung einer gesetzten Impulssperre die Spannungsbelastung maximal nur der Spannungsänderungsgeschwindigkeit zweier Submodule SM entspricht.

Bei einer Spannungsänderungsgeschwindigkeit von beispielsweise 4kV/µs pro Submodul SM beträgt die maximale du/dt-Belastung pro Schaltzustandswechsel nur 8kV/µs gegenüber 16kV/µs bei der herkömmlichen Abarbeitung einer Impulssperre. Das heißt, dass mit dem erfindungsgemäßen Verfahren die Spannungsbelastung für stromrichterinterne Spannungen und Phasenausgangsspannungen zumindest halbiert werden.

Bei dieser erfindungsgemäßen zeitlich abgestuften Abarbeitung einer gesetzten Impulssperre müssen nicht jeweils ein Submodul SM eines oberen und unteren Ventilzweigs gleichzeitig in den Schaltzustand III gesteuert werden, sondern es kann auch nur ein Submodul SM pro Phasenmodul 4₁, 4₂ und 4₃ in den Schaltzustand III gesteuert werden. Mit welchen Submodulen SM eines Phasenmoduls 4₁, 4₂ und 4₃ begonnen wird, ist unerheblich. Auch die Reihenfolge, nach der die Submodule SM eines oberen und unteren Ventilzweiges P1, N1, P2, N2, P3 und N3 bzw. eines Phasenmoduls 4₁, 4₂ und 4₃ in den Schaltzustand III gesteuert werden, ist für die Verringerung der du/dt-Belastung unerheblich.

Wichtig ist, dass zwischen den Schaltzustandswechseln jeweils eines Submoduls SM eines oberen und unteren Ventilzweiges P1, N1, P2, N2, P3 und N3 bzw. eines Phasenmoduls 4₁, 4₂ und 4₃ ein zeitlicher Versatz vorhanden ist.

Wird nur ein Submodul SM eines Phasenmoduls 4₁, 4₂ und 4₃ des Stromrichters 2 mit verteilten Energiespeichern C_{SM} nach FIG 1 bei der zeitlich abgestuften Abarbeitung einer gesetzten Impulsspanne jeweils in den Schaltzustand III gesteuert, werden anstelle von vier Zeitstufen gemäß FIG 4 doppelt so viele Zeitstufen, nämlich acht Zeitstufen benötigt, bis eine gesetzte Impulssperre umgesetzt worden ist. Dementsprechend wird für die Umsetzung einer gesetzten Impulssperre wesentlich mehr Zeit benötigt. Bei einer Submodul-Anzahl von zwölf und mehr pro Ventilzweig P1, N1, P2, N2, P3 und N3 des Stromrichters 2 nach FIG 1 muss je nach Anwendungsfall des Stromrichters geprüft werden, ob die Schutzfunktionen, die mit der Impulssperre initialisiert werden, erfüllt werden können.

Die Impulssperre wird gesetzt, um in kritischen Betriebszuständen, beispielsweise Überstrom, Überspannung oder Ausfall der Ansteuerung, den des Stromrichter 2 mit verteilten Energiespeichern C_{SM} derart abzuschalten, dass sich dieser nach Betätigen der Impulssperre in einem sicheren Zustand befindet. Wegen dieser Fehlerfälle steht für die Abschaltung des Stromrichters 2 nicht eine unbegrenzte Zeit zur Verfügung.

Aus diesem Grund wird das erfindungsgemäße Verfahren angewendet, bei dem pro Zeitstaffel zwei Submodule, nämlich ein Submodul im oberen Ventilzweig P1, P2, P3 und ein Submodul SM im unteren Ventilzweig N1, N2, N3 gleichzeitig in den Schaltzustand III gesteuert werden.

## Patentansprüche

1. Verfahren zum Sperren eines Stromrichters (2) mit verteilten Energiespeichern (Cₛₘ) mit wenigstens zwei Phasenmodulen (4₁,4₂,4₃), die jeweils einen oberen und unteren Ventilzweig (P1,N1,P2,N2,P3,N3) aufweisen, die jeweils eine Vielzahl von elektrisch in Reihe geschalteten zweipoligen Submodulen (SM1, SM2, ..., SMn) aufweisen, die jeweils einen unipolaren Speicherkondensator (C_{SM}) aufweisen, dem eine Reihenschaltung zweier abschaltbarer Halbleiterschalter (S1,S2) jeweils mit einer antiparallel geschalteten Diode (D1,D2) elektrisch parallel geschaltet ist, mit folgenden Verfahrensschritten:
a) Auslösung einer Impulssperre zur zeitlich gestaffelten Steuerung der Submodule (SM1, SM2, ..., SMn) des Stromrichters (2) in einen Schaltzustand III aufgrund eines auftretenden Fehlers während des Betriebs dieses Stromrichters (2), wobei im Schaltzustand III die zwei abschaltbarer Halbleiterschalter (S1,S2) im Aus-Zustand sind,
b) Steuerung eines Schaltzustands eines zweipoligen Subsystems (SM1) eines jeden Ventilzweigs (P1,N1,P2,N2,P3,N3) in den Schaltzustand III nach gesetzter Impulssperre,
c) Steuerung eines Schaltzustands eines weiteren Submoduls (SM2) eines jeden Ventilzweigs (P1,N1,P2,N2,P3,N3) in einen Schaltzustand III nach Ablauf einer vorbestimmten Zeitspanne (Δt), und
d) Wiederholung des Verfahrensschritts c) so lange, bis alle zweipoligen Submodule (SM1,SM2, ..., SMn) eines jeden Ventilzweigs (P1,N1,P2,N2,P3,N3) im Schaltzustand III gesteuert sind.

2. Verfahren nach Anspruch 1, **dadurch gekennzeichnet, dass** die zeitgestaffelte Schaltzustands-Steuerung der zweipoligen Subsysteme (SM1,SM2, ..., SMn) eines jeden Ventilzweigs (P1,N1,P2,N2,P3,N3) des Stromrichters (2) mit verteilten Energiespeichern (C_{SM}) mit einem äußeren zweipoligen Subsystem (SM1) eines oberen und unteren Ventilzweigs (P1,N1,P2,N2,P3,N3) eines jeden Phasenmoduls (4₁,4₂,4₃) beginnt.

3. Verfahren nach Anspruch 1, **dadurch gekennzeichnet, dass** die zeitgestaffelte Schaltzustands-Steuerung der zweipoligen Subsysteme (SM1,SM2, ..., SMn) eines jeden Ventilzweigs (P1,N1,P2,N2,P3,N3) des Stromrichters (2) mit verteilten Energiespeichern (C_{SM}) mit einem inneren zweipoligen Subsystem (SMn) eines oberen und unteren Ventilzweigs (P1,N1,P2,N2,P3,N3) eines jeden Phasenmoduls (4₁,4₂,4₃) beginnt.

4. Verfahren nach Anspruch 1, **dadurchgekennzeichnet**, dass die vorbestimmte Zeitspanne (Δt) gleich einer Ausschaltverzögerungszeit eines abschaltbaren Halbleiterschalters (S1,S2) eines zweipoligen Subsystems (SM1,SM2, ..., SMn) ist.

5. Verfahren nach Anspruch 1, **dadurch gekennzeichnet, dass** im Schaltzustand III eines zweipoligen Submoduls (SM1,SM2, ..., SMn) die beiden abschaltbaren Halbleiterschalter (S1,S2) dieses zweipoligen Submoduls (SM1, SM2, ..., SMn) ausgeschaltet sind.

## Claims

1. Method for inhibiting a converter (2) with distributed energy stores (Cₛₘ) having at least two phase modules (4₁,4₂,4₃), which each have an upper and a lower valve branch (P1, N1, P2, N2, P3, N3), which each have a multiplicity of two-pole submodules (SM1, SM2, ..., SMn), which are electrically connected in series and each have a unipolar energy storage capacitor (C_{SM}), with which a series circuit of two semiconductor switches (S1,S2) which can be turned off, each with a diode (D1, D2) connected back-to-back in parallel, is connected electrically in parallel, having the following method steps:
a) triggering of a pulse inhibit for time-staggered control of the submodules (SM1, SM2, ..., SMn) of the converter (2) to a switching state III on the basis of a fault occurring during the operation of this converter (2) wherein in the switching state III the two semiconductor switches S1,S2) which can be turned off are in the off state,
b) control of a switching state of one two-pole subsystem (SM1) in each valve branch (P1,N1,P2,N2,P3,N3) to the switching state III after a pulse inhibit has been set,
c) control of a switching state of a further submodule (SM2) in each valve branch (P1,N1,P2,N2,P3,N3) to a switching state III after a predetermined time interval (Δt) has elapsed, and
d) repetition of method step c) until all the two-pole submodules (SM1,SM2, ..., SMn) in each valve branch (P1, N1, P2, N2, P3, N3) have been controlled to the switching state III.

2. Method according to Claim 1, **characterized in that,** the time-staggered switching state control of the two-pole subsystems (SM1,SM2, ..., SMn) in each valve branch (P1,N1,P2,N2,P3,N3) in the converter (2) with distributed energy stores (C_{SM}) starts with an outer two-pole subsystem (SM1) in an upper and a lower valve branch (P1,N1,P2,N2,P3,N3) in each phase module (4₁,4₂,4₃).

3. Method according to Claim 1, **characterized in that,** the time-staggered switching state control of the two-pole subsystems (SM1,SM2, ..., SMn) in each valve branch (P1,N1,P2,N2,P3,N3) in the converter (2) with distributed energy stores (C_{SM}) starts with an inner two-pole subsystem (SMn) in an upper and a lower valve branch (P1,N1,P2,N2,P3,N3) in each phase module (4₁,4₂,4₃).

4. Method according to Claim 1, **characterized in that,** the predetermined time interval (Δt) is equal to a switching-off delay time of a semiconductor switch (S1,S2) which can be turned off, in a two-pole subsystem (SM1, SM2, ..., SMn).

5. Method according to Claim 1, **characterized in that,** when one two-pole submodule (SM1,SM2, ..., SMn) is in the switching state III, the two semiconductor switches (S1,S2) which can be turned off in this two-pole submodule (SM1, SM2, ..., SMn) are switched off.

## Revendications

1. Procédé de blocage d'un convertisseur (2) à accumulateurs (Cₛₘ) d'énergie répartis, ayant au moins deux modules (4₁, 4₂, 4₃) de phase, qui ont chacun une branche (1, N1, P2, N2, P3, N3) de soupape supérieure et inférieure, qui ont chacune une pluralité de sous-modules (SM1, SM2, ..., SMn) bipolaires montés en série électriquement, qui ont chacun un condensateur (C_{SM}) accumulateur unipolaire, avec lequel est monté en parallèle électriquement un montage série de deux interrupteurs (S1, S2) à semi-conducteur pouvant être déconnectés et ayant chacun une diode (D1, D2) montée tête-bêche, comprenant les stades de procédé suivants :
a) déclenchement d'un blocage par impulsion pour mettre, d'une manière échelonnée dans le temps, les sous-modules (SM1, SM2, ..., SMn) du convertisseur (2) dans un état de commutation III en raison d'un défaut apparaissant pendant le fonctionnement de ce convertisseur (2), les deux interrupteurs (S1, S2) à semi-conducteur pouvant être déconnectés étant, dans l'état de commutation III, dans l'état ouvert,
b) mise d'un état de commutation d'un sous-système (SM1) bipolaire de chaque branche (P1, N1, P2, N2, P3, N3) de soupape dans l'état de commutation III après application du blocage par impulsion,
c) mise d'un état de commutation d'un autre sous-module (SM2) de chaque branche (P1, N1, P2, N2, P3, N3) de soupape dans un état de commutation III après écoulement d'un laps de temps (Δt) défini à l'avance et
d) répétition du stade c) du procédé jusqu'à ce que tous les sous-modules (SM1, SM2, ..., SMn) bipolaires de chaque branche (P1, N1, P2, N2, P3, N3) de soupape soient mis dans l'état de commutation III.

2. Procédé suivant la revendication 1, **caractérisé en ce que** la mise dans l'état de commutation échelonné dans le temps des sous-systèmes (SM1, SM2, ..., SMn) bipolaires de chaque branche (P1, N1, P2, N2, P3, N3) de soupape du convertisseur (2) à accumulateurs (C_{SM}) d'énergie répartis commence par un sous-système (SM1) bipolaire extérieur d'une branche (P1, N1, P2, N2, P3, N3) de soupape supérieure et inférieure de chaque module (4₁, 4₂, 4₃) de phase.

3. Procédé suivant la revendication 1, **caractérisé en ce que** la mise dans l'état de commutation échelonné dans le temps des sous-systèmes (SM1, SM2, ..., SMn) bipolaires de chaque branche (P1, N1, P2, N2, P3, N3) de soupape du convertisseur (2) à accumulateurs (C_{SM}) d'énergie répartis commence par un sous-système (SMn) bipolaire intérieur d'une branche (P1, N1, P2, N2, P3, N3) supérieure et inférieure de chaque module (4₁, 4₂, 4₃) de phase.

4. Procédé suivant la revendication 1, **caractérisé en ce que** le laps de temps (Δt) défini à l'avance est égal à un temps de retard d'ouverture d'un interrupteur (S1, S2) à semi-conducteur pouvant être déconnecté d'un sous-système (SM1, SM2, ..., SMn) bipolaire.

5. Procédé suivant la revendication 1, **caractérisé en ce que**, dans l'état de commutation III d'un sous-module (SM1, SM2, ..., SMn) bipolaire, les deux interrupteurs (S1, S2) à semi-conducteur pouvant être déconnectés de ce sous-module (SM1, SM2, ..., SMn) bipolaire sont ouverts.
